# FASCICULE DE BREVET EUROPEEN

(11) **EP 1 232 483 B1**
(45) Date de publication et mention de la délivrance du brevet: **16.08.2006**
(21) Numéro de dépôt: 00988863.7
(22) Date de dépôt: 21.11.2000
(51) Int. Cl.: G07B 17/00

(54) **ENVOI ET RECEPTION DE COURRIER HYBRIDE SECURISE**
GESICHERTES SENDEN UND EMPFANGEN VON HYBRIDPOST
SECURE TRANSMISSION AND RECEPTION FOR HYBRID MAIL

(30) Priorité: 22.11.1999 FR 9914666
(43) Date de publication de la demande: 21.08.2002
(73) Titulaire: Posteasy S.A., 75003 Paris (FR)
(72) Inventeur: CHEVALIER, Régis, F-77230 Dammartin-en-Goele (FR); CONDAT, Jean-Bernard, F-93402 Saint-Ouen (FR); MATEOS, Grégory, F-93160 Noisy-Le-Grand (FR); PINCHON, Jean-Baptiste, F-75004 Paris (FR); POMMIER, Frank, F-74300 Cluses Fr (FR)
(74) Mandataire: Breese, Pierre
(86) Numéro de dépôt international: PCT/FR2000/003229
(87) Numéro de publication internationale: WO 2001/039132

(56) Documents cités:
- WO-A-99/21330
- US-A- 4 106 060
- US-A- 5 805 810
- US-A- 5 826 034
- US-A- 5 918 220

## Description

La présente invention concerne le domaine des envois et des réceptions de courriers à remise sécurisée tels que les recommandés ou les plis par porteurs spéciaux utilisant des moyens informatiques.

Un envoi de courrier par la poste traditionnelle consiste simplement à payer l'acheminement par un service spécialisé d'un courrier pour lequel on a spécifié une adresse de destination. L'usage courant est d'apposer un timbre acheté préalablement, ou tout autre marque prouvant que le paiement a été effectué. Ces opérations étant anonymes, il demeure toujours un risque de non-acheminement du courrier simple.

Pour l'envoi de documents officiels ou nécessitant un traitement particulier, on utilise deux services supplémentaires permettant d'assurer l'envoi et la réception des documents. Le système de courrier recommandé permet dé s'assurer que le courrier sera effectivement acheminé et permet d'obtenir une preuve de l'envoi de l'enveloppe contenant les documents. Afin de s'assurer que le courrier sera remis à son destinataire réel, on utilise un accusé de réception. Cet accusé de réception est signé par le destinataire puis est remis à l'expéditeur. Dans tous les cas, la remise de l'enveloppe et non de son contenu est certifiée par ces systèmes. Dans le cas où l'enveloppe est vidée, intentionnellement ou non, lors du transfert, il n'est pas possible de retrouver le document tel qu'il a été envoyé sans posséder soi-même une procédure d'archivage des envois. Il est également possible d'utiliser des systèmes dont le coût dépasse la valeur des documents pour s'assurer de la remise desdits documents.

Des tels documents peuvent nécessiter des envois en grande quantité, par exemple dans le cas de l'envoi de convocations à un examen ou à l'assemblée générale d'une société.

Il existe des procédés d'envois massifs de courriers permettant d'automatiser cette tâche.

Le brevet FR9711798 concerne un système de préparation d'articles de courrier comprenant un ordinateur à usage général pour élaborer un document à expédier, un dispositif postal de sécurité relié à l'ordinateur à usage général par une liaison sécurisée pour lui communiquer une information d'affranchissement, une imprimante reliée à l'ordinateur à usage général pour imprimer à la fois le document à expédier et au moins une adresse d'un destinataire de ce document et une empreinte postale sur une enveloppe devant recevoir ce document, et une plieuse/inséreuse reliée à la fois à l'imprimante et à l'ordinateur à usage général pour recevoir et plier le document imprimé et l'insérer dans l'enveloppe affranchie correspondante.

Ces solutions permettent l'automatisation de l'envoi de document en grand nombre à partir d'un ordinateur central, mais ne permettent pas de certifier les éléments envoyés et d'offrir des garanties suffisantes de mémorisation des messages.

Une amélioration du système de saisie du courrier est décrite dans le brevet US5805810. Ce brevet concerne une méthode pour façonner des courriers hybrides à partir des messages électroniques du type email. On utilise un ordinateur possédant au moins une base de données contenant les identifiants des expéditeurs de messages qui se sont enregistrés, les identifiants des destinataires et les adresses associées à tous les identifiants. Le procédé décrit dans ce brevet consiste à recevoir les emails envoyés par l'expéditeur en utilisant son identifiant et celui du destinataire, à trouver dans la base de données les correspondances entre les identifiants et les adresses, et à façonner le courrier hybride portant l'adresse du destinataire et correspondant à l'email envoyé.

Cette méthode permet d'envoyer un courrier hybride à partir de n'importe quel terminal connecté au réseau Internet. Il n'utilise cependant que le courrier classique, dans lequel subsistent les difficultés liées à la certification du contenant et du contenu de l'envoi et de la réception des messages.

Le brevet W09921330 concerne un système de transmission d'un document d'un point d'envoi à un point de réception à l'aide d'un point d'acheminement valide. Un document sélectionné est transmis physiquement ou électroniquement par un point d'envoi à un serveur de lettres commandé par un service de remise. Une confirmation de la transmission du document est fournie à l'envoyeur par le service de remise. Ensuite, le serveur de lettres reproduit le document de qualité originale, accompagné des éventuels articles nécessaires tels que le contenant de remise et/ou les instructions de remise. Le service de remise remet alors le document reproduit tel que par remise électronique ou acheminement du document reproduit dans son paradigme de remise pour une remise physique au destinataire indiqué.

Le brevet US526034 concerne un système et un procédé de livraison de bout en bout de charge de trafic ubiquiste permettant de transférer une charge de trafic au moyen de règles suivant des procédés de communication multiples établies par un expéditeur. Le transfert de la charge de trafic s'effectue au moyen du support préféré jusqu'à ce que les paramètres de transfert soient après quoi un ou plusieurs autres supports (FAX, messagerie vocale, etc.) sont utilisés jusqu'à ce que le transfert de la charge de trafic soit réalisé. Avant l'accomplissement du transfert, l'expéditeur a la possibilité de demander au système de livraison de charge de déterminer l'état de ladite charge. Dès l'accomplissement de la livraison, l'expéditeur reçoit une notification.

L'invention a pour but de pallier à ces inconvénients en proposant un système peu coûteux permettant de mémoriser, et de certifier le contenant et le contenu des envois effectués par courrier hybride sécurisé. Elle permet également d'envoyer des messages rapidement et à toute heure en libérant l'expéditeur de l'ingrate et fastidieuse complétude de la liasse transporteur.

L' invention est définie par l'objet de la revendication 1.

Avantageusement, on mémorise en outre les informations concernant la remise du courrier hybride au destinataire spécifique et à reconnaître de façon non répudiable par le transporteur.

Dans une variante préférée, les informations de remise du courrier comprennent une identification certaine du récepteur du courrier hybride. Il est systématiquement demandé une marque-signature non répudiable juridiquement au destinataire.

La mémorisation du contenu de l'enveloppe numérique utilise préférentiellement des moyens de certification de date et de contenu. On peut également créer un journal des actions effectuées depuis la réception de l'enveloppe numérique auquel on donne accès à l'expéditeur de l'enveloppe numérique.

Avantageusement, le serveur centralisateur envoie une notification de réception de l'enveloppe numérique à l'expéditeur de ladite enveloppe. Cette notification peut comprendre la liste des éléments reçus et inviter à compléter l'enveloppe numérique s'il manque des éléments nécessaires à l'envoi du courrier hybride ou si l'enveloppe s'avérait être corrompue ou virusée.

Dans une variante, l'expéditeur utilise un moyen d'identification certaine pour l'envoi de l'enveloppe numérique.

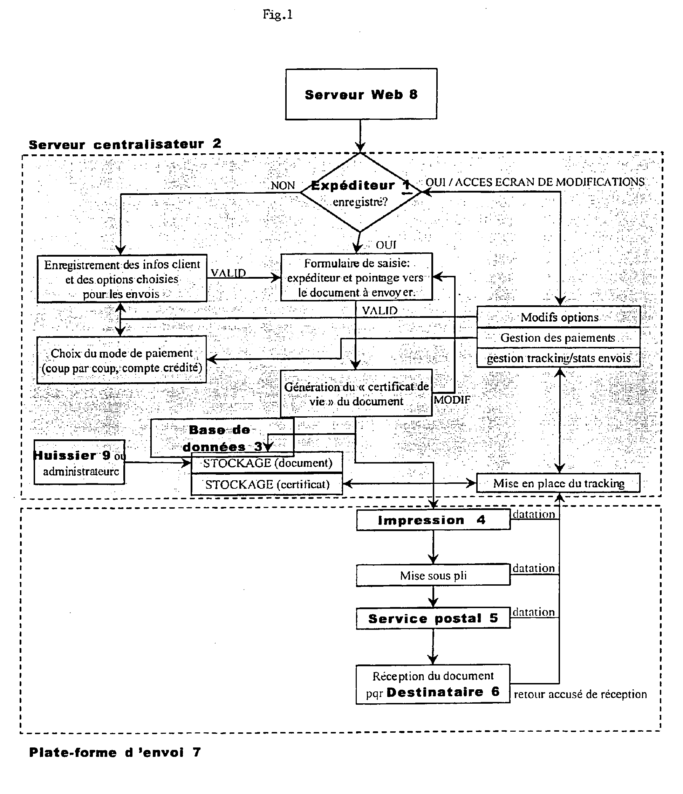

L'invention sera mieux comprise par la description détaillée de la figure 1 qui représente le schéma général du procédé selon l'invention.

Un expéditeur (1) cherche à créer un courrier hybride sécurisé à partir de son terminal. S'il possède un navigateur adapté au réseau Internet, il se connecte à un serveur Web (8) sur lequel il remplit alors un formulaire d'identification comportant quelques questions nécessaires à la création de son profil utilisateur. Son mot de passe lui est transmis pour confirmation quelques secondes après par email ou par tout autre moyen. Le paiement de ses envois peut se faire par carte bancaire (au coup le coup ou de façon permanente) ou par prélèvement sur compte bancaire ou postal. L'expéditeur (1) peut alors télécharger le document à envoyer sur le serveur centralisateur (2) appartenant à la plate-forme générale (7). Il précise alors les paramètres de sa demande de transmission en recommandé ou en mode sécurisé.

Ces paramètres consistent en le type d'envoi désiré, en les coordonnées du (ou des) destinataire et en les options concernant l'archivage. Le type d'envoi peut consister en un envoi recommandé simple ou avec accusé de réception. L'adresse est une adresse unique ou un ensemble d'adresse réunies pour un envoi groupé. Il est également possible de définir un ensemble d'adresses personnalisé qui est mémorisé sur la base de données (3). L'expéditeur n'aura alors plus qu'à faire référence à ces adresses mémorisées, ce qui présente un gain de rapidité lorsqu'il s'agit d'effectuer des envois groupés.

Dans une variante préférée, l'expéditeur (1) se trouve sur le réseau LAN ou extranet de son entreprise. Lorsqu'il désire procéder à l'envoi d'un courrier hybride sécurisé, il clique sur l'icône spécifique dans la barre des outils de son traitement de texte habituel. Une fenêtre de dialogue s'ouvre alors et propose à l'expéditeur de saisir les caractéristiques de sa requête: adresse du destinataire et la valeur des paramètres de son profil utilisateur (défini par son responsable réseau à l'ouverture de son compte) qu'il souhaite modifier spécialement pour cette requête. La fermeture de la fenêtre de dialogue génère une enveloppe numérique transmise immédiatement au routeur de l'entreprise qui s'occupe de l'envoi au serveur centralisateur (2).

Dans une seconde variante préférée, l'expéditeur 1 n'a pas la possibilité de se connecter par le truchement d'un terminal. Il appelle alors téléphoniquement un numéro de téléphone spécifique (SDA) qui lui aura préalablement été affecté lors de la création de son profil utilisateur. Le système vocal l'invite alors à frapper son code confidentiel de huit chiffres sur le clavier de son téléphone. Si la réponse est exacte, le système vocal l'invite à raccrocher immédiatement. Le serveur centralisateur (2) appelle de lui-même le numéro d'appel du télécopieur communiqué dans le profil utilisateur de l'expéditeur (1). Ce dernier n'a plus qu'à glisser le document dans le télécopieur et à appuyer sur la touche de prise de ligne. Le document à transmettre au(x) destinataire(s) indiqué(s) clairement sur le premier feuillet se dématérialisera par le truchement du scanner du télécopieur pour arriver sur la plate-forme d'envoi (7) sous forme d'une enveloppe numérique. Un système de lecture automatique des caractères (OCR) transformera la première page du document en l'adresse du/des destinataire(s).

Dans tous les cas, les documents reçus par le serveur centralisateur sont mémorisés dans une base de données spécifique pendant une durée minimale définie par le prestataire de service. Cette durée est d'au moins un jour. Dans le cas où l'expéditeur l'a demandé dans les paramètres d'envoi, il est possible d'archiver les informations concernant l'envoi pendant une durée au moins dix fois supérieure à la durée minimale. Cette option d'archivage permet de conserver des traces de tous les envois durablement. Avantageusement pour le prestataire de service, la première durée minimale est gratuite, alors que l'extension de durée est payante. Il est également possible pour l'expéditeur de définir un prix d'extension à partir duquel le serveur centralisateur calcule la durée d'archivage supplémentaire à laquelle il a droit. Éventuellement, les données concernant les adresses d'expédition et du destinataire, ainsi que l'enveloppe numérique, peuvent avoir une durée de vie limitée.

Le serveur (2) est en fait hébergé chez un huissier de justice (9) au sein de son étude. L'huissier procède au séquestre de l'enveloppe numérique et à la création d'un identifiant numérique/code-barre unique clef principale d'entrée du certificat de vie. Il est le gardien de la confidentialité des informations contenues dans le futur courrier hybride. Il est à même de procéder à la création d'une ampliation, c'est-à-dire de la copie certifiée conforme du courrier hybride rematérialisé.

Le système utilise ensuite un service d'impression et de mise sous enveloppe (4) qui se charge alors d'imprimer le document en aveugle et du façonnage de l'enveloppe papier. La remise à un service postal, (5) se fait selon les instructions données par l'expéditeur.'Afin d'assurer le lien entre le contenant et le contenu du courrier hybride, selon l'invention, il est encapsulé au sein de chaque page imprimée une empreinte numérique cachée dans chaque page permettant à l'huissier de justice (9) de reconnaître sans controverse l'originalité d'un courrier hybride original. Cette empreinte numérique regroupe par exemple l'intégralité du certificat de vie dans les éléments d'identification des adresses de l'expéditeur (1) et du destinataire (6) sur le courrier hybride. Les liasses transporteurs sont ainsi identifiées de façon non-équivoques même en cas de perte de l'identifiant unique du certificat de vie ou de son représentant code-barre.

Dans le cas où le document n'aurait pas pu être imprimé (pour un problème de format par exemple), un message est envoyé par la plate-forme (7) à l'expéditeur. Dans le cas où il y aurait un bourrage papier dans l'imprimante en charge du façonnage du courrier hybride, le pli en cours de création sera maculé d'encre spéciale afin d'éviter que l'opérateur puisse lire une partie de l'information avant sa mise sous enveloppe. L'enveloppe spéciale sera d'une opacité maximale, faite dans une substance très difficilement déchirable, résistante à l'eau et close mécaniquement par l'usage d'une substance anti-spoliation.

Dès retour de l'accusé de réception du document recommandé par la plate-forme, un second message peut informer l'utilisateur (s'il le désire) de la disponibilité de ce document et des paramètres de durée d'archivage de la version numérique du document original chez l'huissier (9). L'accusé de réception ou la preuve de remise transporteur, s'il elle n'est pas déjà sous une forme numérique, est scannérisée par un automate. Un progiciel a la charge d'amender le certificat de vie du courrier hybride spécifique par l'image numérique de cet avis de remise. Dans le cas d'un retour du courrier hybride (NPAI - n'habite pas à l'adresse indiquée) ou d'une signalisation d'erreur par le transporteur (spoliation, destruction, par exemple), une indication est tout de suite portée sur le certificat de vie. Dans la variante ou l'accusé de réception ne serait pas arrivé, la plate-forme d'envoi (7) mettra tout en oeuvre pour informer la poste ou le transporteur d'un incident et d'y trouver une réponse efficace et satisfaisante pour l'expéditeur. La plate-forme agit en toute transparence en lieu et nom de l'expéditeur (1).

Lors de la première utilisation du service, l'expéditeur envoie un email vide à une adresse prédéfinie et reçoit un fichier informatif lui expliquant le processus à suivre afin de s'inscrire et de transmettre simplement un document par un second message à la plate-forme. Il lui sera alors proposé de faire un compte de dépôt afin de lui éviter de décliner ses références bancaires systématiquement. Toutes les informations concernant les transactions effectuées et l'archivage peuvent être mémorisées dans une base de données (3), éventuellement intégrée au serveur centralisateur (2).

Si l'utilisateur se trouve sur un réseau local au sein d'une structure, il lui sera facile de cliquer sur une icône de son traitement de texte afin de réaliser automatiquement la création de l'enveloppe numérique du document recommandé en question.

Dans le cadre d'entreprise où le nombre de courriers à remise spéciale (lettre recommandées avec AR, documents reçus par coursiers ou transporteurs) est important, la plate-forme est en mesure de scanneriser par un automate les documents arrivant tous les matins. Il est alors créé une enveloppe numérique qui recevra le même traitement par l'huissier de justice (9). Cette enveloppe numérique est alors routée par la plate-forme sur l'adresse électronique du destinataire désigné dans le document original, le service courrier de l'entreprise, ou même une personne habilitée hiérarchiquement au traitement de ces documents. L'archivage de ces documents entrants peut être fait sur plusieurs années en fonction des besoins de l'entreprise.

Les différents acteurs entrant en jeu dans des envois de courrier hybride sont explicités ci-dessous.

Le salarié connecté à un réseau LAN clique sur une icône sur son terminal habituel. Apparaît alors une fenêtre de dialogue lui demandant les coordonnées de son destinataire et les éventuels paramètres de son profil utilisateur qu'il souhaite modifié. Une fois les données rentrées, une icône de validation lui permet de transformer sa requête en une enveloppe numérique transmise immédiatement à la plate-forme. En fonction de sa hiérarchie au sein de l'entreprise, il lui est possible de se connecter sur le site Web et de suivre en direct ses plis. L'administrateur système de son entreprise lui aura donné un identifiant et un mot de passe dans ce sens.

L'internaute se connecte sur un site d'envoi de courrier par l'entremise de son navigateur habituel. S'il est nouveau, il devra compléter un rapide formulaire donnant ses coordonnées, ses préférences d'envoi, son numéro de carte bancaire, son email et ses priorités d'envoi (LR+AR, stockage un mois, gestion personnelle des AR, etc.) La page HTML sécurisée sera transmise à la plate-forme pour validation (création d'un certificat utilisateur, création d'un compte par l'attribution d'un identifiant et d'un mot-de-passe). Il n'aura plus qu'à passer une requête d'envoi d'un courrier hybride pour initier son compte. Pour suivre son courrier hybride à la trace, il lui suffira de se connecter sur son compte sur le site Web ou alors de faire une simple demande par email en donnant le code identifiant de son courrier hybride comme clef. Quelques secondes après, il pourra avoir le tracking complet de son document.

Le client non informatisé signe un accord lui permettant de transmettre par un simple télécopieur une enveloppe numérique à la plate-forme. Un numéro d'appel téléphonique SDA lui est affecté. Il lui suffit de le composer, d'écouter le message de bienvenue, puis de taper son code confidentiel afin que la plate-forme rappelle quelques secondes plus tard son télécopieur. Il lui est possible de recevoir la copie d'un certificat de vie soit de façon automatique par courrier papier ou télécopie, soit en appelant le numéro téléphonique du service client (option de son numéro SDA).

L'huissier de justice possède un terminal de consultation de l'ensemble des documents (enveloppes numériques et certificats de vie) qui sont sur le serveur centralisateur depuis l'ouverture du service. Toutes les fois qu'un courrier hybride arrive, il en fait un séquestre, attribue un identifiant unique et vérifie l'intégrité des informations consignées. Sur requête de l'expéditeur ou d'une Cour de justice, il est à même d'établir un procès-verbal relatif à un certificat de vie et/ou un courrier hybride donné. Il est seul habilité à ouvrir une enveloppe électronique émise par un expéditeur donné.

Le technicien logisticien voit arriver les enveloppes numériques de requête. Il est en charge de l'alimentation de l'imprimante et du bon fonctionnement de la chaîne de mise sous enveloppe, et de l'assemblage de chaque courrier hybride. En cas de bourrage, il applique strictement les consignes de travail qui lui sont imposées. Chacun de ses gestes est pris en compte pour l'écriture d'une ligne dans le certificat de vie du courrier hybride considéré (début de l'impression, début de la mise sous pli, fermeture du contenant, ensachage).

Le responsable AR/help desk reçoit tous les matins plusieurs sacs d'accusé de réception postaux, de courriers hybrides en NPAI, de lettres de réclamation ou de liasses transporteurs. Il a la charge de les numériser et d'amender les certificats de vie du courrier hybride correspondant. En cas où l'accusé de réception n'est pas arrivé selon un délai raisonnable, il a le devoir d'émettre une lettre de réclamation au transporteur en charge du courrier hybride. Outre cette tâche de complétude du certificat de vie, il répond aux réclamations téléphoniques des clients et/ou prospects.

Le destinataire reçoit par l'entremise de son facteur ou d'un transporteur un courrier hybride. Il signe la liasse de transporteur et émet éventuellement les restrictions liées à son aspect physique. Il est en mesure de joindre le service client pour répondre à toutes les questions ou interrogations qu'il pourrait avoir.

Le responsable Internet/réseaux a la charge d'expliquer le concept de courrier hybride à remise sécurisé aux responsables informatiques et télécommunications des entreprises dont il a la charge. Dans le cas d'un grand compte, il est en mesure de porter un regard sur les problèmes de firewalls. De plus, il est en charge de la gestion des incidents de la plate-forme , de l'évolution des formats des fichiers ainsi que des évolutions produits.

## Revendications

1. Procédé d'envoi de courrier physique à au moins un destinataire spécifique, comportant une étape de création d'une enveloppe numérique comportant au moins un élément d'identification de l'expéditeur, le contenu du courrier sous une forme numérique et les éléments numérique permettant l'acheminement du courrier au destinataire spécifique, une étape de transmission par un réseau numérique de ladite enveloppe numérique à une plate-forme comportant un serveur centralisateur, ladite plate-forme effectuant l'impression des éléments contenus dans l'enveloppe numérique, la création d'un courrier postal comportant les informations liées au destinataire dudit courrier et le contenu imprimé, et la transmission du courrier postal à un service postal d'acheminement, une étape de mémorisation, dans une base de données, des éléments contenus dans l'enveloppe numérique et des informations concernant le destinataire du courrier, une étape accessoire de délivrance d'un certificat comportant les informations archivées relatives à un courrier spécifique, cette étape étant activée par une requête émise par l'expéditeur de ladite enveloppe numérique,
**caractérisé en ce que** ladite mémorisation du contenu est systématiquement effectuée pendant une première durée d'au moins un jour, et, lorsque l'enveloppe numérique comporte une séquence d'instruction de conservation, pendant une seconde durée d'archivage au moins dix fois supérieure à ladite première durée,
et, lors de ladite impression, des données d'empreinte numérique cachée permettant de reconnaître sans controverse l'originalité du courrier, sont encapsulées dans chaque page.

2. Procédé d'envoi de courrier selon la revendication 1 **caractérisé en ce qu'**on mémorise en outre les informations concernant la remise du courrier au destinataire spécifique.

3. Procédé d'envoi de courrier selon la revendication 2 **caractérisé en ce que** les informations de remise du courrier comprennent une identification certaine du récepteur du courrier.

4. Procédé d'envoi de courrier selon l'une quelconque des revendications précédentes **caractérisé en ce que** la mémorisation du contenu de l'enveloppe numérique utilise des moyens de certification de date et de contenu.

5. Procédé d'envoi de courrier selon l'une quelconque des revendications précédentes **caractérisé en ce que** l'on crée un journal des actions effectuées depuis la réception de l'enveloppe numérique et **en ce que** l'on donne un accès à ce journal à l'expéditeur de l'enveloppe.

6. Procédé d'envoi de courrier selon l'une quelconque des revendications précédentes **caractérisé en ce que** le serveur centralisateur envoie une notification de réception de l'enveloppe numérique à l'expéditeur de ladite enveloppe.

7. Procédé d'envoi de courrier selon la revendication 6 **caractérisé en ce que** ladite notification comprend la liste des éléments reçus et invite à compléter l'enveloppe numérique s'il manque des éléments nécessaires à l'envoi du courrier.

8. Procédé d'envoi de courrier selon l'une quelconque des revendications précédentes **caractérisé en ce que** l'expéditeur utilise un moyen d'identification certaine pour l'envoi de l'enveloppe numérique.

9. Procédé d'envoi de courrier selon la revendication 8 **caractérisé en ce que** l'expéditeur transmet les documents au serveur centralisateur par un moyen de télécommunication activé par le serveur centralisateur après identification de l'expéditeur.

10. Procédé d'envoi de courrier selon la revendication 8 ou 9 **caractérisé en ce qu'**il comporte une étape d'authentification de l'expéditeur par des moyens téléphoniques.

11. Procédé d'envoi de courrier selon l'une quelconque des revendications précédentes, **caractérisé en ce que** ladite empreinte numérique comprend l'intëgralité dudit certificat dans les éléments d'identification des adresses de l'expéditeur et du destinataire.

12. Procédé d'envoi de courrier selon l'une quelconque des revendications précédentes, **caractérisé en ce que** ladite étape de création d'une enveloppe numérique comporte une sous-étape de numérisation de documents matériels et une sous-étape de reconnaissance de caractères pour déterminer les éléments d'identification des destinataires.

## Claims

1. Method of sending a physical letter to at least one specific addressee, comprising a step of creating a digital envelope comprising at least one element for identifying the sender, the contents of the letter in digital format and digital elements that enable sending of the letter to the specific addressee, a step of transmitting said digital envelope over a digital network to a platform comprising a centralising server, said platform then printing the elements contained in the digital envelope, the creation of a letter comprising the information relating to the addressee of said letter and the printed contents, and sending the letter to a mail distribution service, a step of memorising, in a database, the elements contained in the digital envelope and information relating to the addressee of the letter, an additional step of delivering a certificate containing the filed information relating to a specific letter, this step being triggered via a request sent by the sender of said digital envelope,
**characterised in that** said memorisation of the contents is systematically performed with an initial duration of one day and, when the digital envelope comprises a storage instruction sequence, with a second filing duration that is at least ten times longer than said initial duration,
and, during said printing step, hidden digital fingerprint data that enable the originality of the letter to be recognised without a doubt, are included on each page.

2. Method of sending a letter according to claim 1, **characterised in that** the information relating to the delivery of the letter to the specific addressee is also memorised.

3. Method of sending a letter according to claim 2, **characterised in that** the information relating to the delivery of the letter comprises a reliable identification of the receiver of the letter.

4. Method of sending a letter according to any one of the preceding claims, **characterised in that** the memorisation of the contents of the digital envelope uses means for certifying the date and contents.

5. Method of sending a letter according to any one of the preceding claims, **characterised in that** a log of actions performed after receiving the digital envelope is created and **in that** the sender of the envelope is granted access to this log.

6. Method of sending a letter according to any one of the preceding claims, **characterised in that** the centralising server sends an acknowledgement of receipt of the digital envelope to the sender of said envelope.

7. Method of sending a letter according to claim 6, **characterised in that** said acknowledgement includes the list of elements received and an invitation to complete the digital envelope if it is missing any of the elements it needs for sending the letter.

8. Method of sending a letter according to any one of the preceding claims, **characterised in that** the sender uses reliable identification means to send the digital envelope.

9. Method of sending a letter according to claim 8, **characterised in that** the sender sends the documents to the centralising server using telecommunications means activated by the centralising server after having identified the sender.

10. Method of sending a letter according to claim 8 or 9, **characterised in that** it comprises a step of authenticating the sender using telephonic means.

11. Method of sending a letter according to any one of the preceding claims, **characterised in that** said digital fingerprint comprises the whole of said certificate in the elements that identify the addresses of the sender and of the addressee.

12. Method of sending a letter according to any one of the preceding claims, **characterised in that** said step of creating a digital envelope comprises a sub-step of scanning physical documents and a sub-step of character recognition in order to determine the identifying elements of the addressees.

## Patentansprüche

1. Materielles Postversandverfahren an mindestens einen bestimmten Empfänger, welches die Phase der Erstellung eines digitalen Umschlags umfasst, der mindestens ein Identifikationselement des Absenders, den Inhalt des Schreibens in digitaler Form und die die Beförderung des Schreibens an den bestimmten Empfänger ermöglichenden digitalen Elemente umfasst, die Phase der Weiterleitung des besagten digitalen Umschlags über ein digitales Netz an eine Plattform, die einen zentralisierenden Server umfasst, wobei diese Plattform die im digitalen Umschlag enthaltenen Elemente ausdruckt, die Erstellung eines Postschreibens mit Informationen im Zusammenhang mit dem Empfänger dieses Schreibens und dem gedruckten Inhalt, und die Übertragung des Postschreibens an einen Postbeförderungsservice, eine Phase der Speicherung der im digitalen Umschlag enthaltenen Elemente und von Informationen betreffend den Empfänger des Schreibens in eine Datenbank, eine Nebenphase der Auslieferung eines Zertifikats mit archivierten Informationen zu einem bestimmten Schreiben, wobei diese Phase durch einen vom Absender besagten digitalen Umschlags versandte Anfrage ausgelöst wird, **dadurch gekennzeichnet, dass** besagte Speicherung des Inhalts systematisch in einem ersten Zeitraum von mindestens einem Tag vorgenommen wird, und wenn der digitale Umschlag eine Sequenz zur Speicheranweisung enthält, in einem zweiten Archivierungszeitraum von mindestens zehnmal dem ersten Zeitraum, und **dadurch** dass während des besagten Drucks in jede Seite verborgene digitale Abdrücke, die das unumstrittene Erkennen des Ursprungs des Schreibens ermöglichen, gekapselt werden.

2. Postversandverfahren nach Patentanspruch 1, **dadurch gekennzeichnet, dass** man ferner die Daten betreffend die Zustellung des Schreibens an einen bestimmten Empfänger speichert.

3. Postversandverfahren nach Patentanspruch 2, **dadurch gekennzeichnet dass** die Daten über die Zustellung des Schreibens eine sichere Identifikation des Empfängers des Schreibens enthalten.

4. Postversandverfahren nach einem der vorgenannten Patentansprüche, **dadurch gekennzeichnet dass** für die Speicherung des Inhalts des digitalen Umschlags Zertifizierungsmittel für Datum und Inhalt verwendet werden.

5. Postversandverfahren nach einem der vorgenannten Patentansprüche, **dadurch gekennzeichnet dass** man ein Protokoll über die seit dem Empfang des digitalen Umschlags durchgeführten Vorgänge führt und man dem Absender des Umschlags Zugriff auf dieses Protokoll gewährt.

6. Postversandverfahren nach einem der vorgenannten Patentansprüche, **dadurch gekennzeichnet, dass** der zentralisierende Server dem Absender besagten Umschlags eine Mitteilung über den Empfang des digitalen Umschlags sendet.

7. Postversandverfahren nach Patentanspruch 6, **dadurch gekennzeichnet dass** besagte Mitteilung die Liste der erhaltenen Elemente umfasst und dazu auffordert, den digitalen Umschlag zu ergänzen, falls zum Versenden erforderliche Elemente fehlen sollten.

8. Postversandverfahren nach einem der vorgenannten Patentansprüche, **dadurch gekennzeichnet, dass** der Absender zum Versenden des digitalen Umschlags ein sicheres Identifikationsmittel verwendet.

9. Postversandverfahren nach Patentanspruch 8, **dadurch gekennzeichnet dass** der Absender die Dokumente an die Serverzentrale über ein von der Serverzentrale nach der Identifikation des Absenders aktiviertes Telekommunikationsmittel übermittelt.

10. Postversandverfahren nach Patentanspruch 8 oder 9, **dadurch gekennzeichnet dass** es eine Phase der Authentifizierung des Absenders durch telefonische Mittel umfasst.

11. Postversandverfahren nach einem der vorgenannten Patentansprüche, **dadurch gekennzeichnet, dass** besagter digitaler Abdruck das Zertifikat in den Identifikationselementen der Adressen des Absenders und des Empfängers enthält.

12. Postversandverfahren nach einem der vorgenannten Patentansprüche, **dadurch gekennzeichnet, dass** besagte Phase der Erstellung eines digitalen Umschlags eine Nebenphase der Digitalisierung von materiellen Dokumenten und eine Nebenphase der Erkennung von Zeichen zur Bestimmung der Identifikationselemente der Empfänger umfasst.
